# EUROPÄISCHE PATENTSCHRIFT

(11) **EP 2 935 005 B1**
(45) Veröffentlichungstag und Bekanntmachung des Hinweises auf die Patenterteilung: **19.06.2019**
(21) Anmeldenummer: 13815736.7
(22) Anmeldetag: 20.12.2013
(51) Int. Cl.: B64D 11/00

(54) **VERFAHREN ZUM SCHUTZ EINES PASSAGIERS UND ANORDNUNG AUS KLAPPTISCH UND SITZPLATZBILDSCHIRM**
METHOD FOR PROTECTING A PASSENGER AND ARRANGEMENT CONSISTING OF A FOLDING TABLE AND A SEAT SCREEN
PROCÉDÉ DE PROTECTION D'UN PASSAGER ET ENSEMBLE CONSTITUÉ D'UNE TABLETTE RABATTABLE ET D'UN ÉCRAN DE PLACE ASSISE

(30) Priorität: 20.12.2012 DE 102012224091
(43) Veröffentlichungstag der Anmeldung: 28.10.2015
(73) Patentinhaber: Lufthansa Systems GmbH & Co. KG, 65479 Raunheim (DE)
(72) Erfinder: HOMMEL, Peter, 61348 Bad Homburg (DE); LAKHLOUFI, Mohamed, 65428 Rüsselsheim (DE); HABICH, Christian, 61279 Grävenwiesbach (DE); LIEBE, Jörg, 65191 Wiesbaden (DE); POETZSCH, Patrick, 61467 Kronberg (DE); WALLIS, Eckart, 68259 Mannheim (DE)
(74) Vertreter: dompatent von Kreisler Selting Werner - Partnerschaft von Patent- und Rechtsanwälten mbB
(86) Internationale Anmeldenummer: PCT/EP2013/077602
(87) Internationale Veröffentlichungsnummer: WO 2014/096316

(56) Entgegenhaltungen:
- WO-A2-2012/129116
- DE-A1- 4 340 189
- FR-A1- 2 883 529

## Beschreibung

Die Erfindung betrifft ein Verfahren zum Schützen eines Passagiers vor einem Sitzplatzbildschirm sowie ein Sitz mit einem in der Rückenlehne angeordneten Klapptisch.

Passagiersitze sind insbesondere in einem Flugzeug typischerweise mit Klapptischen ausgestattet, die derart vor dem Sitzplatz angeordnet sind, dass der Klapptisch in einer ersten Klappstellung als Nichtgebrauchsstellung verstaut werden kann und zur Benutzung in eine zweite Klappstellung als Gebrauchsstellung hochgeklappt werden kann. Sowohl in der Nichtgebrauchs- als auch in der Gebrauchsstellung ist der Klapptisch verriegelbar. In dem Fall, dass vor dem betreffenden Passagiersitz ein weiterer Passagiersitz angeordnet ist, ist der Klapptisch an der Rückseite der Rückenlehne des vorderen Passagiersitzes schwenkbar befestigt. In dem Fall, dass vor dem betreffenden Passagiersitz kein weiterer Sitzplatz, sondern vielmehr eine Bordwand angeordnet ist, kann der Klapptisch an der Bordwand befestigt sein.

Desweiteren sind Sitzplätze für Passagiere in Verkehrsmitteln, wie z. B. Flugzeugen, Reisebussen, Bahnen, Schiffen oder Autos heutzutage meist mit einem Sitzplatzbildschirm ausgestattet, der vor dem Passagier, beispielsweise in der Rückseite der Rückenlehne des Vordersitzes oder in einer Bordwand vor dem Passagiersitz, untergebracht ist. Bei dem Sitzplatzbildschirm kann es sich um einen fest installierten Bildschirm oder um einen herausnehmbaren Bildschirm nach Art eines Tablet-PC's handeln. In diesem Fall ist der Sitzplatzbildschirm zumindest vor dem Passagier in der Rückenlehne oder in der Bordwand verstaubar. Dabei befindet sich der Sitzplatzbildschirm oberhalb des dem Passagiersitz zugeordneten Klapptisches. Eine solche Anordnung aus Passagiersitz und Sitzplatzbildschirm ist beispielsweise in DE 43 40 189 A1 beschrieben.

Einrichtungsgegenstände in einem Flugzeug sollten bestimmte Sicherheitskriterien erfüllen, um das Verletzungsrisiko für Passagiere, insbesondere während des Starts und während der Landung zu minimieren. Bei Sitzplatzbildschirmen besteht ein Sicherheitsrisiko darin, dass im Falle einer Beschädigung des Bildschirms Glas oder das Gehäuse zerbricht und scharfe Kanten in Kopfhöhe des Passagiers gebildet werden können.

Der Erfindung liegt die Aufgabe zugrunde, die Sicherheit für einen Passagier in einem Verkehrsmittel zu erhöhen und den Passagier besser vor einem Sitzplatzbildschirm zu schützen.

Das erfindungsgemäße Verfahren ist definiert durch die Merkmale von Anspruch 1. Die erfindungsgemäße Anordnung aus einem Klapptisch und einem Sitzplatzbildschirm ist definiert durch die Merkmale von Anspruch 7.

Nach dem erfindungsgemäßen Verfahren wird zumindest ein Teil des Klapptisches in eine Schutzstellung vor den Bildschirm gebracht, um den Passagier vor dem Bildschirm zu schützen. Dabei ist denkbar, dass die Schutzstellung eine dritte Klappstellung ist, die vorzugsweise oberhalb der ersten und zweiten Klappstellung angeordnet ist. Zum anderen ist auch denkbar, dass der in die Schutzstellung bringbare Teil des Klapptisches ein gegenüber einem in der Gebrauchsstellung als Ablage dienende Teil des Klapptisches verschwenkbar ist. Während also der als Ablage dienende Teil in der Gebrauchsstellung oder in der Nichtgebrauchsstellung verbleibt, kann der Schutzteil des Klapptisches vor diesen verschwenkt werden. Eine dritte Alternative kann darin bestehen, dass der Schutzteil des Klapptisches gegenüber dem als Ablage dienenden Teil des Klapptisches verschiebbar ist. Beispielsweise kann eine Schutzplatte aus dem Klapptisch herausgezogen werden, z. B., wenn der Klapptisch in der Nichtgebrauchsstellung ist. Typischerweise ist der Klapptisch in der Nichtgebrauchsstellung unterhalb des Sitzplatzbildschirms parallel zu der Rückenlehne des jeweiligen Vordersitzes angeordnet. Der Schutzteil des Klapptisches kann dann parallel zu der Rückenlehne nach oben bis vor den Bildschirm verschoben werden und dort verriegelt werden. Eine Verriegelung des Schutzteils ist wünschenswert. Zudem sollte der Schutzteil oder gar der gesamte Klapptisch aus einem transparenten Material bestehen.

Nach der erfindungsgemäßen Anordnung aus einem Klapptisch und einem Sitzplatzbildschirm ist also zumindest ein Teil (Schutzteil) des Klapptisches in eine Schutzstellung bringbar, in der der Sitzplatzbildschirm aus Blickrichtung des Passagiers zumindest zu einem Teil bedeckt wird. In der Schutzstellung bildet der betreffende Teil des Klapptisches gewissermaßen ein Schutzschild zwischen dem Sitzplatzbildschirm und dem Passagier. Dabei sollte der Klapptisch in der Schutzstellung vorteilhafterweise verriegelt werden, um ein versehentliches Lösen aus der Schutzstellung zu verhindern. Die Schutzstellung des Klapptisches wird zumindest während des Starts und während der Landung eines Flugzeuges eingenommen. Bei Bedarf kann der Klapptisch auch zu anderen Zeitpunkten, beispielsweise vor einer anstehenden Notlandung, in die Schutzstellung geklappt werden und dort verbleiben.

Typischerweise ist die erste Klappstellung des Tisches eine untere Klappstellung, die bis auf eine Abweichung von wenigen Grad in einer Vertikalen liegt bzw. parallel zu der Rückseite der Rückenlehne des Vordersitzes angeordnet ist. Von dieser ersten Klappstellung, in der der Tisch während des Nichtgebrauchs verstaut wird, wird er zum Gebrauch um etwa 90° (bis auf eine Abweichung von wenigen Grad) in eine mittlere Klappstellung als Gebrauchsstellung aufgeklappt. In der Gebrauchsstellung können auf dem Tisch Mahlzeiten, Getränke oder andere Gegenstände in Reichweite des Passagiers abgestellt werden. Die dritte Klappstellung ist als Schutzklappstellung bis auf eine Abweichung von wenigen Grad um etwa weitere 90° nach oben verschwenkt, so dass die dritte Klappstellung gegenüber der ersten Klappstellung um etwa 180° verschwenkt ist.

Auf diese Weise kann erfindungsgemäß der Sitzplatzbildschirm bei Bedarf auf einfache Weise abgedeckt werden, um den Passagier vor dem Sitzplatzbildschirm zu schützen, ohne dass zusätzliche Abdeckungen oder Schilde vorzusehen sind. Vielmehr wird der ohnehin vorhandene Klapptisch um eine weitere Funktion - die Schutzfunktion für den Passagier - ergänzt. Dabei ist es von besonderem Vorteil, wenn der Klapptisch zumindest zu einem Teil derart transparent ausgebildet ist, dass er die Sicht auf den Sitzplatzbildschirm freigibt, wenn er in die dritte Klappstellung (Schutzstellung) geklappt worden ist. Während des Starts und während der Landung ist ein Flugzeugpassagier dann zum einen vor dem Bildschirm geschützt und kann zum anderen Videos auf dem Bildschirm betrachten, beispielsweise Sicherheitsvideos mit Informationen über das Verhalten in Gefahrensituationen.

Ergänzend ist denkbar, einen vor den Sitzplatzbildschirm bringbaren Laden vorzusehen. Der Laden kann als Rollladen, Schiebeladen oder Steckladen ausgebildet sein und beispielsweise an der Rückenlehne des jeweiligen Sitzes angebracht sein. Der Laden kann zum Abdecken des Sitzplatzbildschirms Anwendung finden, wenn der Schutzteil des Klapptisches nicht verfügbar oder verwendbar ist.

Im Folgenden werden anhand der Figuren Ausführungsbeispiele näher erläutert. Es zeigen:
- Fig. 1: ein erstes Ausführungsbeispiel in einer ersten Gebrauchsstellung,
- Fig. 2: die Anordnung nach Fig. 1 in einer zweiten Gebrauchsstellung,
- Fig. 3: die Anordnung nach Fig. 1 in einer dritten Gebrauchsstellung,
- Fig. 4: ein zweites Ausführungsbeispiel in der ersten Klappstellung,
- Fig. 5: das zweite Ausführungsbeispiel in der zweiten Klappstellung,
- Fig. 6: das zweite Ausführungsbeispiel in der Schutzstellung,
- Fig. 7: ein drittes Ausführungsbeispiel in der ersten Klappstellung,
- Fig. 8: das dritte Ausführungsbeispiel in der Schutzstellung,
- Fig. 9: ein viertes Ausführungsbeispiel in der ersten Klappstellung und
- Fig. 10: das vierte Ausführungsbeispiel in der zweiten Klappstellung.

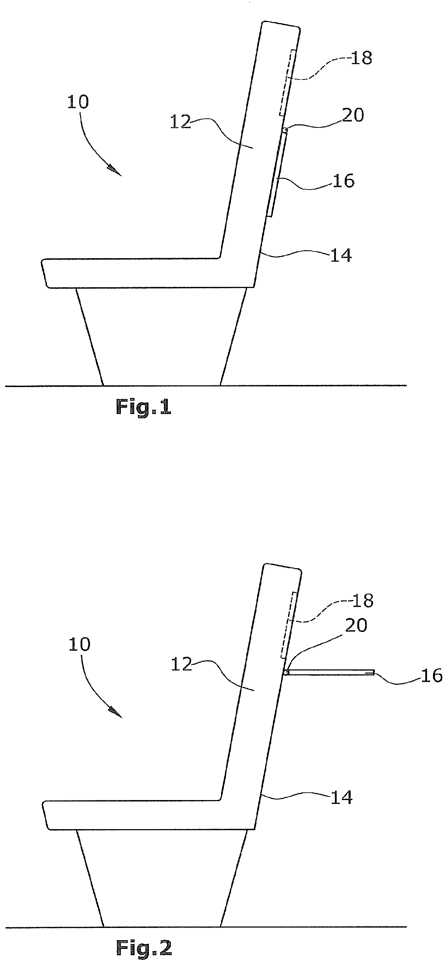

Die Fign. 1-3 zeigen das erste Ausführungsbeispiel mit einem Flugzeugsitz 10 mit dessen Rückenlehne 12. An der Rückseite 14 der Rückenlehne 12 sind ein schwenkbarer Klapptisch 16 und ein Sitzplatzbildschirm 18 befestigt. Bei dem Sitzplatzbildschirm 18 handelt es sich um einen entnehmbaren Flachbildschirm in Form eines Tablet-PC, der zum Betrachten von Filmen in einer Rasthalterung in der in den Figuren dargestellten Position gehalten wird. Der Bildschirm 18 ist dabei als Touchscreen ausgebildet.

Der Klapptisch 16 ist über ein Scharnier 20 mit der Rückenlehne 12 verbunden. Fig. 1 zeigt den Klapptisch 16 in einer unteren ersten Klappstellung, in der der Klapptisch 16 während des Nichtgebrauchs verstaut wird. In dieser Klappstellung befindet sich der Klapptisch 16 unterhalb des Scharniers 20 und parallel zu der Rückseite 14 der Rückenlehne 12.

Zum Gebrauch ist der Klapptisch 16 in die in Fig. 2 dargestellte zweite mittlere Klappstellung schwenkbar, in der der Klapptisch 16 in einer Horizontalebene rastend gehalten wird. In dieser zweiten Klappstellung wird der Klapptisch 16 zum Abstellen von Mahlzeiten, Getränken oder anderen Gegenständen in Reichweite des Passagiers verwendet.

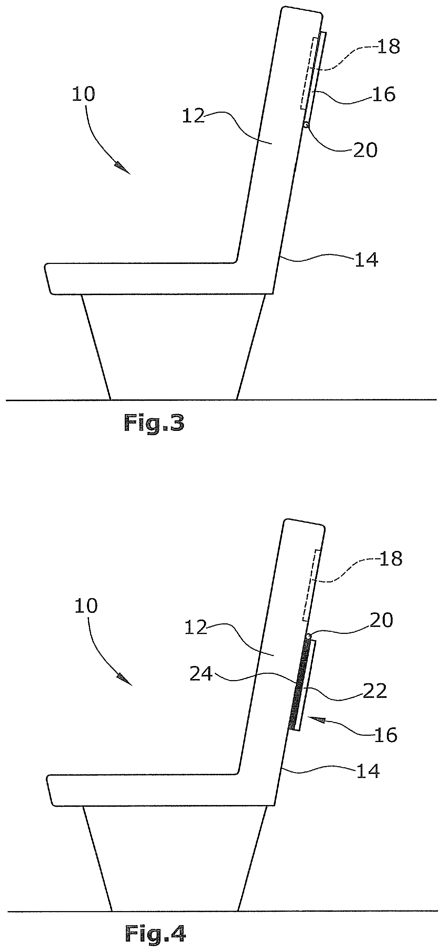

Während Starts und während Landungen des Flugzeugs wird der Klapptisch 16 in die in Fig. 3 dargestellte dritte Klappstellung verschwenkt. Die dritte Klappstellung ist eine Schutzstellung, in der der Sitzplatzbildschirm 18 vollständig von dem Klapptisch 16 bedeckt wird. Der Klapptisch 16 rastet in der dritten Klappstellung ein, um ein versehentliches Freigeben des Bildschirms 18 zu verhindern. In der Schutzstellung bildet der Klapptisch 16 einen Schutz, insbesondere des Kopfes des Passagiers vor dem Bildschirm 18, weil der Bildschirm 18 etwa in Kopfhöhe eines sitzenden Passagiers angeordnet ist. Da der Bildschirm 18 in die Rückenlehne 12 des Flugzeugsitzes 10 derart eingelassen ist, dass die Bildschirmoberfläche mit der Rückseite 14 der Rückenlehne 12 bündig abschließt, ist der Bildschirm 18 in der Schutzstellung des Klapptisches 16 von der Rückenlehne 12 und von dem Klapptisch 16 vollständig umgeben. Die Rückenlehne 12 und der Klapptisch 16 bilden also gewissermaßen ein Schutzgehäuse für den Bildschirm 18.

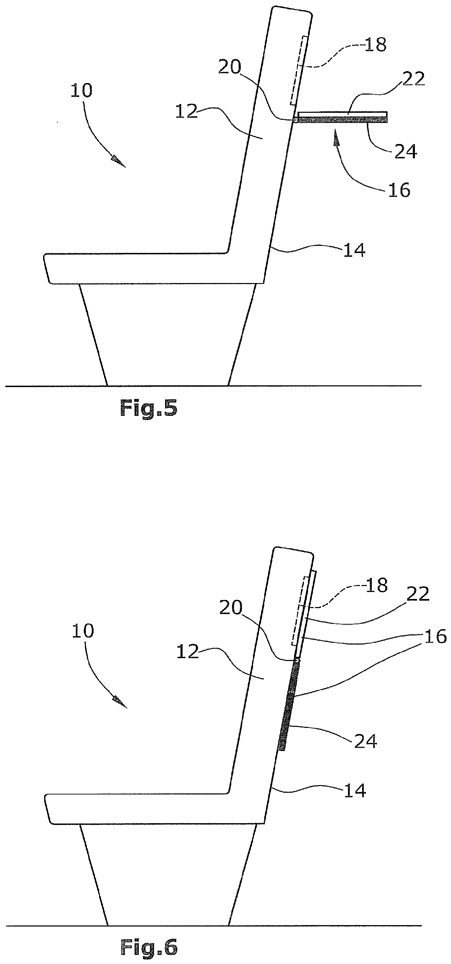

Die Fign. 4-6 zeigen das zweite Ausführungsbeispiel, das sich von dem ersten Ausführungsbeispiel dadurch unterscheidet, dass nicht der gesamte Klapptisch 16 in der Schutzstellung vor den Bildschirm 18 geschwenkt und dort verriegelt wird. Vielmehr wird lediglich ein Teil 22 des Klapptisches 16, wie in Fig. 6 dargestellt, vor den Bildschirm 18 in der Schutzstellung verschwenkt. Dieser Schutzteil 22 ist vollständig transparent, um den Bildschirm 18 in der Schutzstellung gemäß Fig. 6 noch betrachten zu können. Der verbleibende Teil 24 des Klapptisches 16 ist in den Figuren geschwärzt dargestellt, um zu verdeutlichen, dass dieser Teil 24 nicht transparent ausgebildet ist. Bei diesem übrigen Teil 24 handelt es sich um den im Wesentlichen gemäß Fig. 5 als Ablage dienenden Teil 24 in der Gebrauchsstellung des Klapptisches 16. Der Teil 24 erfüllt dabei die statische Stützfunktion, um Gegenstände auf dem Klapptisch 16 abstellen zu können. In der Schutzstellung gemäß Fig. 6 befindet sich der Ablageteil 24 des Klapptisches 16 in seiner Nichtgebrauchsstellung, d. h. parallel zu der Rückseite 14 der Rückenlehne 12 des Vordersitzes, während der Schutzteil 22 um 180° gegenüber dem Ablageteil 24 nach oben verschwenkt vor den Sitzplatzbildschirm 18 geklappt ist und dort verriegelt wird.

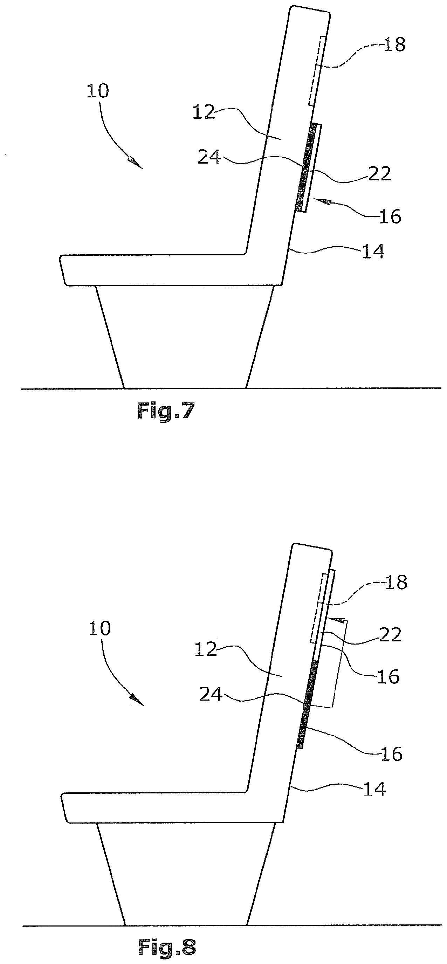

Ein drittes Ausführungsbeispiel ist in den Fign. 7 und 8 gezeigt. Dieses Ausführungsbeispiel unterscheidet sich von dem zweiten Ausführungsbeispiel dadurch, dass der Schutzteil 22 des Klapptisches 16 gegenüber dem Ablageteil 24 nicht verschwenkt wird, sondern vielmehr nach Art einer Schublade gegenüber dem Ablageteil 24 an der Rückenlehne 12 entlang nach oben verschoben wird, bis er vor den Sitzplatzbildschirm 18 gelangt und diesen verdeckt.

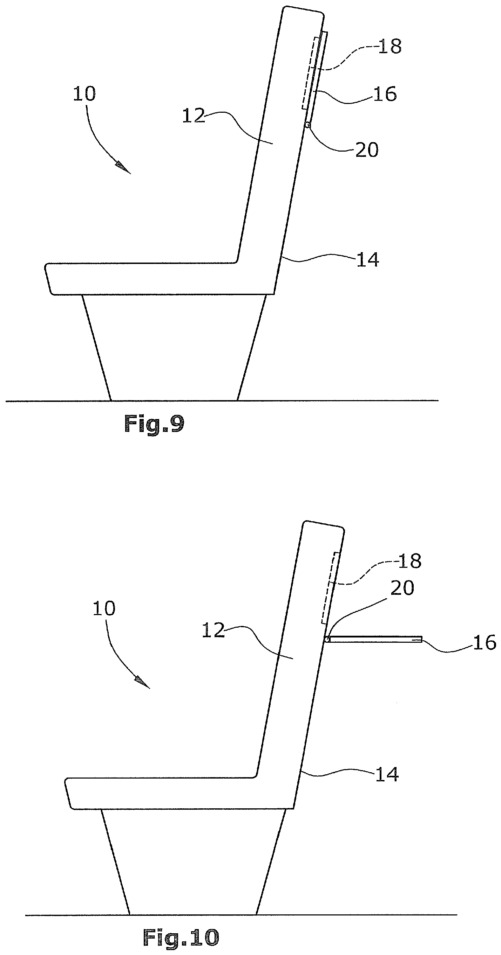

Bei dem Ausführungsbeispiel in den Fign. 9 und 10 handelt es sich um einen vollständig durchsichtigen Klapptisch 16, dessen erste Klappstellung während des Nichtgebrauchs, wie in Fig. 9 dargestellt, zugleich der Schutzstellung zum Schutz des Passagiers vor dem Bildschirm 18 entspricht. Aus der ersten Klappstellung und aus der Schutzstellung gemäß Fig. 9 wird der Klapptisch zum Gebrauch in die zweite Klappstellung gemäß Fig. 10 um etwa 90° nach unten verschwenkt.

Zusätzlich kann jedes der Ausführungsbeispiele einen in den Figuren nicht dargestellten Laden zum Bedecken des Sitzplatzbildschirms aufweisen. Der Laden kann als Rollladen, Schiebeladen oder als Steckladen ausgebildet sein, um den Bildschirm 18 zu bedecken, wenn der Schutzteil 22 des Klapptisches 16 nicht verfügbar oder nicht verwendbar ist. Der Laden kann zudem verwendet werden, um den Schutz eines Passagiers weiter zu verbessern, indem der Bildschirm sowohl von dem Laden als auch von dem Schutzteil 22 des Klapptisches 16 bedeckt wird. Im Falle eines Rollladens oder Schiebeladens kann dieser oberhalb oder seitlich des Bildschirms an der Rückenlehne des Sitzes befestigt sein und in vertikaler Richtung oder in horizontaler Richtung vor den Bildschirm gebracht werden. Im Falle eines Steckladens kann dieser auf den Sitzplatzbildschirm aufgesteckt oder aufgeklemmt werden. Hierzu kann beispielsweise eine Aufnahme an der Rückenlehne des Passagiersitzes zur Aufnahme des Steckladens befestigt sein.

## Patentansprüche

1. Verfahren zum Schützen eines Passagiers in einem Verkehrsmittel, welches mit mindestens einem vor dem Passagier angeordneten klappbaren Tisch (16) und mindestens einem oberhalb des Klapptisches (16) angeordneten Sitzplatzbildschirm (18) versehen ist, wobei der Klapptisch (16) eine erste Klappstellung aufweist, wenn der Klapptisch (16) nicht in Gebrauch ist, und eine gegenüber der ersten Klappstellung um etwa 90° verschwenkte zweite Klappstellung zum Gebrauch des Tisches aufweist, wobei zumindest ein Teil (22) des Klapptisches (16) vor den Sitzplatzbildschirm (18) gebracht wird, um den Passagier vor dem Bildschirm (18) zu schützen,
**dadurch gekennzeichnet, dass**
das Verfahren in einem Flugzeug während des Starts, während der Landung und/oder während Notsituationen des Flugzeugs, wie beispielsweise einer Notlandung, durchgeführt wird und
die erste Klappstellung eine untere Klappstellung und die zweite Klappstellung eine mittlere Klappstellung ist, wobei der Klapptisch (16) zum Schutz des Passagiers in eine obere Klappstellung oberhalb der unteren und mittleren Klappstellung verschwenkt wird.

2. Verfahren nach Anspruch 1, **dadurch gekennzeichnet, dass** der Tisch (16) in der oberen Klappstellung um etwa 180° gegenüber der unteren Klappstellung und um etwa 90° gegenüber der mittleren Klappstellung verschwenkt ist.

3. Verfahren nach einem der vorhergehenden Ansprüche, **dadurch gekennzeichnet, dass** der mindestens eine Teil (22) des Klapptisches (16) in der Schutzstellung derart vor den Sitzplatzbildschirm (18) gebracht wird, dass der Bildschirm (18) vollständig von dem Teil (22) des Klapptisches (16) bedeckt wird.

4. Verfahren nach Anspruch 3, **dadurch gekennzeichnet, dass** der Teil (22) des Klapptisches (16) gegenüber einem weiteren, in der Gebrauchsstellung des Klapptisches (16) als Ablage dienenden Teil (24) des Klapptisches (16) verschwenkbar ist und vor den Sitzplatzbildschirm (18) geklappt werden kann.

5. Verfahren nach Anspruch 3, **dadurch gekennzeichnet, dass** der Teil (22) des Klapptisches (16) gegenüber einem anderen Teil (24) des Klapptisches (16), der in der Gebrauchsstellung als Ablage dient, verschiebbar ist.

6. Verfahren nach Anspruch 5, **dadurch gekennzeichnet, dass** der verschiebbare Teil (22) des Klapptisches (16) aus der ersten Klappstellung heraus vor den Sitzplatzbildschirm (18) schiebbar ist, um diesen zu bedecken.

7. Sitz mit einem in der Rückenlehne angeordneten Klapptisch (16) und einem oberhalb des Klapptisches (16) angeordneten Sitzplatzbildschirm (18), wobei der Klapptisch (16) mit Scharnieren (20) derart an der Rückenlehne befestigt ist, dass er in eine erste Klappstellung bringbar ist, wenn der Klapptisch (16) nicht gebraucht wird und in der der Sitzplatzbildschirm (18) bedienbar ist und in eine zweite Position zur Benutzung des Klapptisches (16) bringbar ist, in der der Sitzplatzbildschirm (18) bedienbar ist, wobei zumindest ein Teil (22) des Klapptisches (16) in eine Schutzstellung bringbar ist, in der er den Sitzplatzbildschirm (18) zumindest teilweise bedeckt,
**dadurch gekennzeichnet, dass**
die erste Klappstellung eine untere Klappstellung, die zweite Klappstellung eine mittlere Klappstellung und die Schutzstellung eine obere Klappstellung oberhalb der ersten und zweiten Klappstellungen ist.

8. Sitz nach dem vorhergehenden Anspruch, **dadurch gekennzeichnet, dass** der Klapptisch (16) in den ersten und dritten Klappstellungen in einer Vertikalen und in der zweiten Klappstellung in einer Horizontalen angeordnet ist, wobei die Scharniere (20) des Klapptisches (16) um mindestens 180° verschwenkbar sind.

9. Sitz nach einem der vorhergehenden Ansprüche 7 und 8, **dadurch gekennzeichnet, dass** der Klapptisch (16) in der Schutzstellung den Sitzplatzbildschirm (18) vollständig bedeckt.

10. Sitz nach einem der vorhergehenden Ansprüche 7 bis 9, **dadurch gekennzeichnet, dass** der Klapptisch (16) in der Schutzstellung verriegelbar ist.

11. Sitz nach einem der vorhergehenden Ansprüche 7 bis 10, **dadurch gekennzeichnet, dass** der Klapptisch (16) derart zumindest zu einem Teil (22) transparent ausgebildet ist, dass der Sitzplatzbildschirm (18) in der Schutzstellung betrachtet werden kann.

12. Sitz nach einem der vorhergehenden Ansprüche 7 bis 11, **dadurch gekennzeichnet, dass** der in die Schutzstellung bringbare Teil (22) des Klapptisches (16) gegenüber dem übrigen Teil (24) des Klapptisches (16) aus der ersten Klappstellung heraus vor den Sitzplatzbildschirm (18) verschiebbar ist.

13. Sitz nach einem der vorhergehenden Ansprüche 7 bis 12, **dadurch gekennzeichnet, dass** ein vor den Sitzplatzbildschirm (18) bringbarer Laden zum Abdecken des Sitzplatzbildschirms vorgesehen ist.

## Claims

1. A method for protecting a passenger in a means of transportation equipped with at least one foldable table (16) arranged in front of the passenger and at least one in-seat screen (18) arranged above the folding table (16), wherein the folding table (16) has a first folding position when the folding table (16) is not in use, and has a second folding position for using the table, in which second position the table is pivoted by about 90° with respect to the first folding position, at least a portion (22) of the folding table (16) is positioned in front of the in-seat screen (18) to protect the passenger from the screen (18),
**characterized in that**
the method is performed in an airplane during take-off, during landing and/or in emergency situations of the airplane, such as an emergency landing, and
the first folding position is a lower folding position and the second folding position is an intermediate folding position, wherein, for the purpose of protecting the passenger, the folding table (16) is pivoted to an upper folding position above the lower and intermediate folding positions.

2. The method of claim 1, **characterized in that** in the upper folding position, the table (16) is pivoted by about 180° with respect to the lower folding position and by about 90° with respect to the intermediate folding position.

3. The method of one of the preceding claims, **characterized in that** in the protective position, the at least one portion (22) of the folding table (16) is positioned in front of the in-seat screen (18) such that the screen (18) is fully covered by said portion (22) of the folding table (16).

4. The method of claim 3, **characterized in that** the portion (22) of the folding table (16) is pivotable with respect to another portion (24) of the folding table (16) which serves as a support when the folding table (16) is in the position of use and which can be folded to be in front of the in-seat screen (18).

5. The method of claim 3, **characterized in that** the portion (22) of the folding table (16) is displaceable with respect to another portion (24) of the folding table (16) which serves as a support when the folding table is in the position of use.

6. The method of claim 5, **characterized in that** the displaceable portion (22) of the folding table (16) is adapted to be displaced from the first folding position in front of the in-seat screen (18) to cover the same.

7. A seat with a folding table (16) arranged in the backrest and an in-seat screen (18) arranged above the folding table (16), wherein the folding table (16) is fastened to the backrest by means of hinges (20) such that it is adapted to be positioned in a first folding position when the folding table (16) is not in use and in which the in-seat screen (18) can be operated, and is adapted to be positioned in a second position for using the folding table (16), in which position the in-seat screen (18) can be operated, wherein at least a portion (22) of the folding table (16) is adapted to be positioned in a protective position in which it covers the in-seat screen (18) at least partly,
**characterized in that**
the first folding position is a lower folding position, the second folding position is an intermediate folding position and the protective position is an upper folding position above the first and second folding positions.

8. The seat the preceding claim, **characterized in that**, in the first and third folding positions, the folding table (16) is arranged in a vertical plane, while it is arranged in a horizontal plane when in the second folding position, wherein the hinges (20) of the folding table (16) are adapted to be pivoted by at least 180°.

9. The seat of one of the preceding claims 7 and 8, **characterized in that**, in the protective position, the folding table (16) completely covers the in-seat screen (18).

10. The seat of one of the preceding claims 7 to 9, **characterized in that** the folding table (16) is adapted to be locked in the protective position.

11. The seat of one of the preceding claims 7 to 10, **characterized in that** the folding table (16) is transparent at least in part (22) such that the in-seat screen (18) can be viewed in the protective position.

12. The seat of one of the preceding claims 7 to 11, **characterized in that** the portion (22) of the folding table (16), which can be positioned in the protective position, is adapted to be displaced, relative to the remaining portion (24) of the folding table (16), from the first folding position in front of the seat screen (18).

13. The seat of one of the preceding claims 7 to 12, **characterized in that** a shutter is provided for covering the in-seat screen, the shutter being adapted to be positioned in front of the in-seat screen (18).

## Revendications

1. Procédé de protection d'un passager dans un moyen de transport comportant au moins une tablette rabattable (16) placée devant le passager et au moins un écran de siège (18) disposé au-dessus de la tablette rabattable (16),
la tablette rabattable (16) présentant une première position de rabat lorsque la tablette rabattable (16) n'est pas utilisée et une deuxième position de rabat, pivotée d'environ 90° par rapport à la première position de rabat, lorsque la tablette est utilisée,
au moins une partie (22) de la tablette rabattable (16) étant amenée devant l'écran de siège (18) pour protéger le passager de l'écran de siège (18),
**caractérisé en ce que**
le procédé est mis en oeuvre dans un aéronef pendant le décollage, l'atterrissage et/ou dans des situations d'urgence de l'aéronef, telles qu'un atterrissage d'urgence, et
la première position de rabat est une position de rabat inférieure et la deuxième position de rabat est une position de pliage intermédiaire, la tablette rabattable (16) étant pivotée pour protéger le passager dans une position de rabat supérieure au-dessus des positions de rabat inférieure et intermédiaire.

2. Procédé selon la revendication 1, **caractérisé en ce que** la tablette (16) est pivotée dans la position de rabat supérieure d'environ 180° par rapport à la position de rabat inférieure et d'environ 90° par rapport à la position de rabat intermédiaire.

3. Procédé selon l'une des revendications précédentes, **caractérisé en ce que** l'au moins une partie (22) de la tablette rabattable (16) est amenée dans la position de protection devant l'écran de siège (18) de manière à ce que l'écran (18) soit complètement recouvert de la partie (22) de la tablette rabattable (16).

4. Procédé selon la revendication 3, **caractérisé en ce que** la partie (22) de la tablette rabattable (16) peut être pivotée par rapport à une autre partie (24) de la table rabattable (16) servant de rangement dans la position d'utilisation de la tablette rabattable (16) et peut être rabattue devant l'écran de siège (18).

5. Procédé selon la revendication 3, **caractérisé en ce que** la partie (22) de la tablette rabattable (16) peut coulisser par rapport à une autre partie (24) de la tablette rabattable (16) qui sert de rangement dans la position d'utilisation.

6. Procédé selon la revendication 5, **caractérisé en ce que** la partie coulissante (22) de la tablette rabattable (16) peut coulisser de la première position de rabat jusque devant l'écran de siège (18) pour recouvrir celui-ci.

7. Siège comportant une tablette rabattable (16) disposée dans le dossier et un écran de siège (18) disposé au-dessus de la tablette rabattable (16),
la tablette rabattable (16) étant fixée au dossier au moyen de charnières (20) de manière à pouvoir être amenée, lorsque la tablette rabattable (16) n'est pas utilisée, dans une première position de rabat dans laquelle l'écran de siège (18) peut fonctionner et, dans une deuxième position pour utiliser la tablette rabattable (16), dans laquelle l'écran de siège (18) peut fonctionner,
au moins une partie (22) de la tablette rabattable (16) pouvant être amenée dans une position de protection dans laquelle elle recouvre au moins partiellement l'écran de siège (18),
**caractérisé en ce que**
la première position de rabat est une position de rabat inférieure, la deuxième position de rabat est une position de rabat intermédiaire et la position de protection est une position de rabat supérieure au-dessus des première et deuxième positions de rabat.

8. Siège selon la revendication précédente, **caractérisé en ce que** la tablette rabattable (16) est disposée verticalement dans les première et troisième positions de rabat et horizontalement dans la deuxième position de rabat,
les charnières (20) de la tablette rabattable (16) pouvant pivoter d'au moins 180°.

9. Siège selon l'une des revendications précédentes 7 et 8, **caractérisé en ce que** la tablette rabattable (16) recouvre complètement, dans la position de protection, l'écran de siège (18).

10. Siège selon l'une des revendications précédentes 7 à 9, **caractérisé en ce que** la tablette rabattable (16) peut être verrouillée dans la position de protection.

11. Siège selon l'une des revendications précédentes 7 à 10, **caractérisé en ce que** la tablette rabattable (16) est conçue pour être transparente au moins par rapport à une partie (22) de telle sorte que l'écran de siège (18) puisse être vu dans la position de protection.

12. Siège selon l'une des revendications précédentes 7 à 11, **caractérisé en ce que** la partie (22) de la tablette rabattable (16), qui peut être amenée dans la position de protection, peut coulisser par rapport à la partie restante (24) de la tablette rabattable (16) de la première position de rabat jusque devant l'écran de siège (18).

13. Siège selon l'une des revendications précédentes 7 à 12, **caractérisé en ce qu'**un volet pouvant être amené devant l'écran de siège (18) est prévu pour recouvrir l'écran de siège.
